# EUROPEAN PATENT SPECIFICATION

(11) **EP 3 448 068 B1**
(45) Date of publication and mention of the grant of the patent: **30.09.2020**
(21) Application number: 18190265.1
(22) Date of filing: 22.08.2018
(51) Int. Cl.: H04W 4/02, H04W 4/029, H04W 4/18, H04L 29/08

(54) **METHOD, TERMINAL AND COMPUTER-READABLE STORAGE MEDIUM FOR DISPLAYING UPDATED ENTRY**
VERFAHREN, ENDGERÄT UND COMPUTERLESBARES SPEICHERMEDIUM ZUR ANZEIGE EINER AKTUALISIERTEN EINGABE
PROCÉDÉ, TERMINAL ET SUPPORT DE STOCKAGE LISIBLE PAR ORDINATEUR POUR AFFICHER UNE ENTRÉE MISE À JOUR

(30) Priority: 22.08.2017 CN 201710726383
(43) Date of publication of application: 27.02.2019
(73) Proprietor: Beijing Xiaomi Mobile Software Co., Ltd., Beijing 100085 (CN)
(72) Inventor: WANG, Ke, Beijing 100085 (CN)
(74) Representative: Hughes, Andrea Michelle

(56) References cited:
- US-A1- 2011 081 895
- US-A1- 2014 095 943
- US-A1- 2016 025 497

## Description

### TECHNICAL FIELD

The present disclosure relates to Internet technologies, and more particularly to a method, terminal and computer-readable storage medium for displaying updated entry.

### BACKGROUND

With the advances in the Internet technologies, mobile phones, computers, and other terminals are widely used. Correspondingly, more and more types of applications with richer and richer features have been developed for the terminals. For example, a user can browse news or other updated entries with reader applications (APPs) installed in the mobile phone or other terminals.

In an example, when a user wants to browse news or other updated entries, the user can trigger the terminal to send a request for acquiring updated entries to the server. After the server receives the request, it can determine the currently updated entry and send it to the terminal. Correspondingly, after the terminal receives the updated entry from the server, it can display the updated entry. The user can then browse the updated entry that is displayed on the terminal.

US2011081895A1 discloses an information browsing system, in some embodiments, at the time when information stored in a server is browsed with the use of a mobile terminal, if the mobile phone is predicted to enter an out-of-service area, information that a user is going to browse is predicted and temporarily stored in the mobile terminal as cache. When the mobile phone is located in a service area at the time of a browse request, information corresponding to the request is acquired from the server, and when the mobile phone is located in an out-of-service area, the information is acquired from the information stored as cache and is displayed. The information stored as cache is deleted when the browsing is ended or when the mobile terminal enters a service area. Therefore, the user can browse desired information even in the out-of-service area with and high security level secured.

US2014095943A1 discloses a device and method for predictively precaching content on a mobile communication device, which includes monitoring numerous data sources for contextual data on the activities of the user. The mobile communication device predicts network connectivity outages and affected applications using the contextual data. The mobile communication device notifies the affected applications of the predicted network connectivity outage, and in response the affected applications precache suitable content. The affected applications may employ several precaching strategies in response to the notification, such as downloading content from a remote content server, adjusting content streaming, or adjusting content buffering prior to the predicted network connectivity outage. During the network outage, application service is provided using the precached content. Such precaching may also be accomplished using a local caching proxy server.

US2016025497A1 discloses an example navigation system, which includes map data memory, a position sensor that determines the present location of the navigation system and provides a navigation system position signal indicative thereof, a wireless transmitter that transmits the navigation system position data, and a wireless receiver that receives cellular data including cellular white spot map data and cellular non-white spot map data in response to the transmitted navigation system position data and stores the received cellular white spot map data and the cellular non-white spot map data in the map data memory. The example navigation system also includes a processor that receives the navigation system position signal and forms a map image based upon received cellular white spot map data when the wireless receiver is not receiving cellular data.

### SUMMARY

The inventors of the present disclosure have recognized that, if a user's current location (for example, in an elevator or a basement) is not covered by the wireless network, the network connection cannot be established between the terminal and the server. In this case, the terminal is unable to receive the updated entry from the server and fails to display the updated entry.

In a first aspect of the present disclosure, there is provided a method for displaying an updated entry as defined by claim 1.

Also described is a device for displaying an updated entry. The device includes: a detection portion configured to acquire a pre-stored target geographic location that is not covered by a wireless network and detect a current geographic location of a terminal; a first acquisition portion configured to acquire a current target updated entry from a backend server of a target application if a distance between the current geographic location of the terminal and the target geographic location is detected to reach a preset distance threshold, where the target application is installed in the terminal and for users to browse the updated entry; and a display portion configured to display the acquired target updated entry if a state where the wireless network is not connected is maintained if an instruction for displaying the updated entry for the target application is received.

In a second aspect of the present disclosure, there is provided a terminal as defined by claim 6.

In a third aspect of the present disclosure, there is provided a non-transitory computer-readable storage medium as defined by claim 11.

It should be understood that the above general descriptions and the detailed descriptions below are only exemplary and explanatory and not intended to limit the present disclosure.

### BRIEF DESCRIPTION OF THE DRAWINGS

The accompanying drawings referred to in the specification are a part of this specification, and provide illustrative embodiments consistent with the disclosure and, together with the detailed description, serve to illustrate some embodiments of the disclosure.
FIG. 1 is a flowchart illustrating a method for displaying an updated entry according to some embodiments;
FIG. 2 is a scenario diagram illustrating the acquisition of an updated entry according to some embodiments;
FIG. 3 is a diagram illustrating a system framework according to some embodiments;
FIG. 4 is a schematic diagram illustrating a device for displaying an updated entry according to some embodiments;
FIG. 5 is a schematic diagram illustrating a device for displaying an updated entry according to some embodiments;
FIG. 6 is a schematic diagram illustrating a device for displaying an updated entry according to some embodiments;
FIG. 7 is a schematic diagram illustrating a device for displaying an updated entry according to some embodiments;
FIG. 8 is a structural schematic diagram illustrating a terminal according to some embodiments.

### DETAILED DESCRIPTION

Various embodiments of the present disclosure are described below with specific examples, and other advantages and effects of the present disclosure can be easily understood by those skilled in the field of technology from the contents disclosed in this specification. The following description refers to the accompanying drawings in which same numeral references in different drawings may represent the same or similar elements unless otherwise indicated. The described embodiments are only some embodiments in the present disclosure, rather than all of them. The present disclosure can also be implemented or applied through different specific embodiments, and various details of the specification can also be modified or changed based on different viewpoints and applications without departing from the scope of the present invention as defined by the claims.

Various embodiments of the present disclosure provide a method for displaying updated entry. The method can be applied to the terminal. The terminal can be mobile phone, tablet or other mobile terminals where a reader application is installed. For example, the terminal can be a mobile phone or other devices where a newsreader application is installed.

The terminal may include processor, storage, transceiver, screen, etc. The processor can be CPU (Central Processing Unit) etc. that is used for the related process like acquiring updated target entry. Storage can be RAM (Random Access Memory), Flash, etc. that is used to store the received data, the data needed in the process, or the generated data during the process, etc. For example, the target geographic location or the updated target entry. The screen can be a touch screen that is used to display the updated entry or other information and can also be used to detect the touch signals. The transceiver can be used to transmit data between other devices, for example, to receive the updated target entry from the server, including antenna, matching circuit, modem, etc.

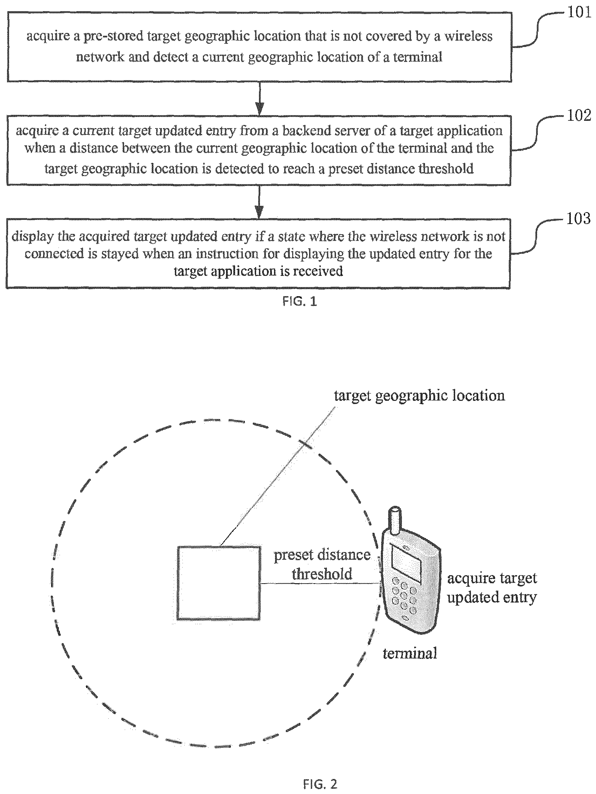

The process flow shown in FIG. 1 will be described in detail hereafter with reference to an implementation.

In step 101, a pre-stored target geographic location that is not covered by the wireless network can be acquired and the current geographic location of the terminal can be detected.

During implementation, the terminal can have the feature of preloading an updated entry. An event for triggering the preloading updated entry may be preset in the terminal and the terminal may detect the event during working. If the terminal detects that preloading updated entry is triggered, it may preload the updated entry. For example, the terminal can preload the corresponding updated entry before a user who carries the terminal enters a certain geographic location that is not covered by the wireless network. In detail, the terminal can pre-store the geographic location that is not covered by the wireless network (that is, the target geographic location).

The target geographic location can be position coordinates or predetermined by the terminal. A switch button for preloading the updated entry may be set in the terminal. If a user wants to use the function of preloading the updated entry, he may click the switch button to open it. Here, the terminal receives the instruction for turning on the feature of preloading the updated entry, and can acquire the pre-stored geographic location that is not covered by the wireless network (for example, an elevator and the like) and detect the geographic location of the terminal itself. That is, if the terminal receives the instruction to enable the function of preloading the updated entry, it may acquire the pre-saved target geographic location that is not covered by the wireless network and may detect the current location of the terminal in real time when the function of preloading the updated entry is enabled.

In some embodiments, the geographic location can be the determined geographic location where the terminal is frequently disconnected from the wireless network. The corresponding process procedure can be: if it is detected that the wireless network is disconnected in the state that the wireless network function is on, the current geographic location of the terminal is determined and recorded; a plurality of geographic locations recorded within a historical period of time are acquired; the frequency of occurrence for each geographic location is counted and the target geographic location for which the frequency of occurrence satisfies the preset times is determined among the plurality of geographic locations.

In some embodiments, if the wireless network function is in an on state (the wireless network function may be a mobile data network function or a WIFI (Wireless Fidelity) wireless network function), the terminal can timely detect currently whether it, itself, is connected to the wireless network. Whenever the terminal detects that it is disconnected from the wireless network, it can determine the current geographic location of the terminal and save it.

After a period of time, the terminal can acquire a plurality of geographic locations recorded within a historical period of time (the plurality of recorded geographic locations may include the same geographic location). All the plurality of recorded geographic locations may be the geographic locations that are not covered the wireless network, i.e., the geographic locations where the terminal cannot be connected to the wireless network.

Furthermore, the terminal can calculate the statistics of the frequency of occurrence of each geographic location among the plurality of recorded geographic locations. For example, the plurality of recorded geographic locations may respectively be A, B, C, A, B, D, A and B. It can be seen that the frequency of occurrence of geographic locations A, B, C and D is 3, 3, 1 and 1 respectively..After the frequency of occurrence of each geographic location are determined, the terminal can select the corresponding the geographic location for which the frequency of occurrence satisfies the preset times from the plurality of geographic locations and take the determined geographic location as the target geographic location.

After the target geographic location is determined, the terminal can save it. It can be seen that the determined target geographic location is in conformity with the user's habit. That is, the determined target geographic location may be the geographic location that is not covered by the wireless network and the user usually goes to. Therefore, it can avoid that the terminal acquires the updated entry from the server when the user approaches the geographic location that is not covered by the wireless network and the user usually does not go to, thereby preventing a waste of data flow.

Additionally, the preset times may be a preset time threshold. In this condition, after statistics of the frequency of occurrence of the plurality of geographic locations is calculated, the geographic location for which the frequency of occurrence is greater than the threshold can be determined among the plurality of geographic locations and the determined geographic location can be set as the target geographic location.

The preset times may also be a preset quantity. In this condition, after the terminal calculates the statistics of the frequency of occurrence of the corresponding geographic locations, it can determine the quantity of the target geographic locations that appear the most and set a preset number of geographic locations as the target geographic locations. In detail, after the terminal calculates the statistics of the frequency of occurrence of the corresponding geographic locations, it may sort the geographic locations in a descending order and further select the preset number of the target geographic locations that are list front from the sorted geographic location list.

Additionally, the terminal may further update the target geographic location. Specifically, a determined cycle may be saved in the terminal in advance. Whenever a preset determined cycle passes, the terminal may acquire a plurality of geographic locations recorded within the current determined cycle so as to count the frequency of occurrence for each of the plurality of geographic locations. Afterwards, the geographic location for which the frequency of occurrence satisfies the preset number may be determined among the plurality of geographic locations and be determined as the target geographic location.

In step 102, if it is detected that the distance between the current geographic location of the terminal and the target geographic location reaches the preset distance threshold, the target updated entry can be acquired from the backend server of the target application.

The target application can be the application installed in the terminal that a user browses the news with, the target updated entry can be the updated entry acquired by the terminal this time, and the updated entry can be the information that needs to be displayed if the target application is turned on or the interface is refreshed.

In some embodiments, a distance threshold can be preset in the terminal. The preset distance threshold can preset by a technical person or independently set by a user. After the terminal detects its current geographic location, it can calculate the distance between the current geographic location and the acquired target geographic location. If the detected distance between the two locations reaches the preset distance threshold, the terminal can send a request for acquiring the updated entry to the backend server of the application.

As shown in FIG. 2, after the backend server of the application receives the request for acquiring the updated entry, the current updated entry (that is, the target updated entry) can be acquired, where the target updated entry may include a plurality of target entries. Further, the target updated entry can be sent to the terminal. After the server sends the target updated entry to the terminal, the terminal can receive the target updated entry sent from the server.

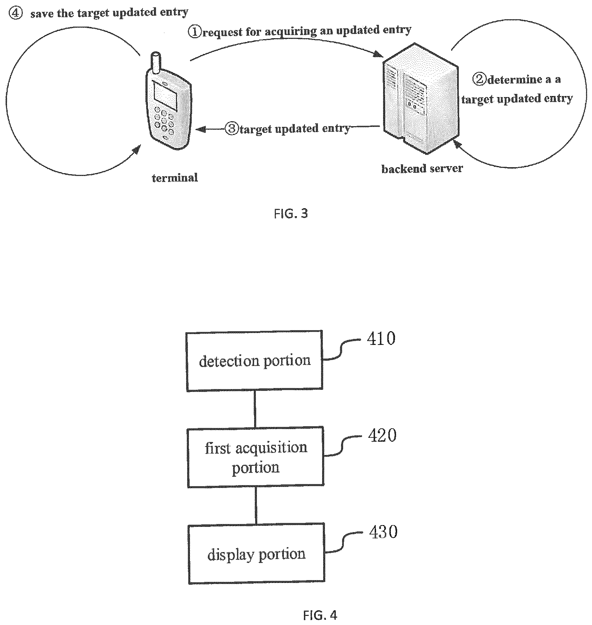

Herein, the terminal has acquired the target updated entry and further can save it as shown in FIG. 3. For example, the target application may be a newsreader application and the updated entry may be news. After the backend server of the newsreader application receives the request for acquiring the updated entry, it can determine the current news and send the determined news to the terminal, that is, the target updated entry may be the current news.

In another example, the target updated entry may be a story reader application that has a function of personalized recommendation and the updated entry may be a story. After the backend server of the story reader application receives the request for acquiring the updated entry, it may determine the story to be recommended to the terminal this time and send the story to the terminal, that is, the target updated entry may be the currently determined story to be recommended to the terminal.

In some embodiments, the abovementioned target application can be predetermined by the terminal based upon the historical use information. The corresponding process procedure can be: the historical use information for each installed application is acquired; in each application, based upon the historical use information for each installed application, the target application whose historical use information satisfies the preset use condition is determined.

The historical use information can be the information to characterize the use of the application within a historical period of time.

In some embodiments, for each application installed in the terminal, if a user uses the application, the terminal can record the use information of the application (for example, use duration). After a period of time, the terminal can acquire the use information of each application within this historical period of time (that is, historical use information) and further determine the application whose historical use information satisfies the preset use condition in accordance with the use information of each application within the historical duration so as to determine the determined application as the target application and save the identifier of the target application. It can be seen that the determined target application may be in conformity with the user's habit. That is, the determined target application may be the application that the user usually uses. Therefore, it can avoid that the terminal acquires the updated entry of the application that the user rarely uses from the server if the user approaches the target geographic location, thereby preventing from a waste of data flow.

Additionally, if using the terminal, the user may uninstall some applications in the terminal and reinstall other applications based on his needs. In this case, the terminal may update the determined target application. Specifically, a determined cycle may be pre-saved in the terminal. Whenever the preset determined cycle passes, the terminal may acquire the use information of each application in the currently determined cycle so as to determine the target application whose historical use information satisfies a preset use condition among the plurality of applications based on the use information of each application in the currently determined cycle (historical use information) and save the identifier of the target application.

In some embodiments, the historical use information can be one or some of the use times, historical use duration, or the time interval between a time point of a previous use and a current time point. The historical use duration may be an accumulated use duration or a duration of a historical single use.

In some embodiments, if the historical use information is the historical use times, after the terminal receives the historical use information for each application, it can determine a preset number of applications whose historical use times are the greatest among the applications and set the preset number of applications as determined as the target applications. Alternatively, it can determine applications whose historical use times are greater than the preset time threshold among the applications and set the applications as determined as the target applications. If the historical use information is the historical use duration, after the terminal receives the historical use information for each application, it can determine the preset number of applications whose historical use duration is the longest among the applications and set the applications as determined as the target application.

Alternatively, it can determine the applications whose historical use duration is longer than the preset threshold among the applications and set the applications as determined as the target applications. If the historical use information is the use time interval between the time point of the previous use and the current time point, after the terminal receives the historical use information for each application, it can determine the preset number of applications whose use time intervals between the time point of the previous use and current time point are the shortest among the applications and set the applications as determined as the target application. Alternatively, it can determine the application whose use time intervals between the time point of the previous use and current time point are shorter than the preset threshold among the applications and set the applications as determined as the target application among the applications. If the historical use information is any combination of abovementioned information, the final determined target application can be the application that satisfies every preset use condition for each corresponding information in the combination.

In some embodiments, the terminal may determine the target application among the applications whose application type is the preset application type. Correspondingly, the terminal may acquire the historical use information through acquiring the historical use information of each of the installed applications whose application type is the preset application type.

During implementation, the preset application type may be preset in the terminal. Where the preset application type may be applications for reading, application for shopping and the like. In this case, for each of the preset type of applications installed in the terminal, whenever a user uses the application, the terminal may correspondingly record the use information (for example, the use duration and the like) of the application. After a period of time, the terminal may acquire the use information of each application in the historical duration (i.e., the historical use information). That is, the terminal does not record the use information of other types of applications any more.

In step 103, when the instruction for displaying the updated entry of the corresponding target application can be received, if it is in the state that wireless network is disconnected, the acquired target updated entry can be displayed.

In some embodiments, if a user wants to browse the updated entry with the target application, he can click the target application icon or refresh the page. Here, the terminal may receive the instruction for displaying the updated entry of the corresponding target application. Furthermore, the terminal can determine whether it is currently in the state that the wireless network is disconnected. If it is currently in the state that the wireless network is disconnected, the terminal can acquire preloaded target updated entry and further display the updated entry. In this way, when a use wants to browse the updated entry, if the user is at a location that is not covered by the wireless network, the terminal may display the pre-acquired target updated entry to avoid the updated entry from failing to be displayed.

In some embodiments, when the instruction for displaying the updated entry of the corresponding target application is received, if the terminal is in the state that the wireless network is connected, the process can also be: when the instruction for displaying the updated entry of the corresponding target application is received, if the terminal is in the state that the wireless network is connected, the terminal can acquire the updated entry to be displayed from the backend server of the target application and further display the acquired updated entry to be displayed.

In some embodiments, when the instruction for displaying the updated entry of the corresponding target application is received and if the terminal is in the state that the wireless network is connected, the terminal can send a request for acquiring the updated entry to the backend server of the target application. After the backend server receives the request for acquiring the updated entry, it can acquire the updated entry to be displayed (that is, the server determines the updated entry according to the request for acquiring the updated entry) and further send the updated entry to be displayed to the terminal. Correspondingly, the terminal can receive the updated entry to be displayed from the server. Here, the terminal has acquired the updated entry to be displayed and further displays the received updated entry.

In some embodiments, after the terminal acquires the target updated entry, the terminal can delete the updated entry if a certain condition is satisfied. The corresponding process can be: starting from the time point if the target updated entry is received and within the preset duration, if the target updated entry is detected to be not displayed, it will be deleted.

In some embodiments, after the terminal acquires the target updated entry, it can start timing. If the timed duration is detected to reach the preset duration but the target updated entry is still not displayed yet, the terminal can delete the pre-stored target updated entry in order to free up storage space and increase the operating speed. In other words, if timed duration reaches the preset duration, a user who carries the terminal has not yet entered the target geographic location or the user enters the target geographic location but does not trigger the terminal to receive the updated entry, the terminal can delete the pre-stored target updated entry.

In some embodiments of the present disclosure, the pre-stored target geographic location that is not covered by the wireless network can be acquired and the current geographic location of the terminal can be detected. If it is detected that the distance between the current geographic location of the terminal and the target geographic location reaches the preset distance threshold, a request for the acquiring updated entry can be sent to the backend server of the application. When the instruction for displaying the updated entry of the corresponding target application is received, if it is currently in the state that wireless network is disconnected, the acquired target updated entry can be displayed. Thus, when a user wants to browse the update entry, if the geographic location of the user is not covered by the wireless network, the terminal can display pre-acquired target updated entry to prevent the updated entry from failing to be displayed.

The present disclosure further provides a device for displaying an updated entry. As shown in FIG. 4, the device includes: a detection portion 410 configured to acquire a pre-saved geographic location that is not covered by a wireless network and detect current geographic location of a terminal; a first acquisition portion 420 configured to acquire the current target updated entry from the backend server of the target application if the distance between the current geographic location of the terminal and the target geographic location reaches a preset distance threshold, where the target application is installed in the terminal and for users to browse the updated entry; and a display portion 430 configured to display the acquired target updated entry if it is in a state that the wireless network is disconnected if the instruction for displaying the updated entry of the corresponding target application is received.

In some embodiments, the various portions may be in modular form, and may be referred to as modules. In some embodiments, the various portions can be discrete components, integrally formed, hardware implemented, software implemented, or a mix thereof.

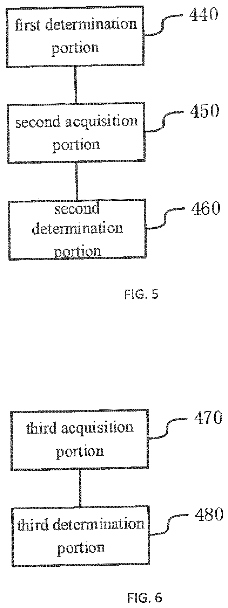

In some embodiments, as shown in FIG. 5, the device may further include: a first determination portion 440 configured to determine and record the current geographic location of the terminal when the wireless network function is in an on state and it is detected that the wireless network is disconnected; a second acquisition portion 450 configured to acquire a plurality of geographic locations recorded within a historical period of time; and a second determination portion 460 configured to count a frequency of occurrence and determine a target geographic location for which the frequency of occurrence satisfies the preset times among the plurality of geographic locations.

In some embodiments, as shown in FIG. 6, the device further includes: a third acquisition portion 470 configured to acquire historical use information of each installed application, where the historical use information represents usage of a corresponding application.

a third determination portion 480 configured to determine a target application whose historical use information satisfies the preset use condition based upon the corresponding historical use information of each application.

In some embodiments, the historical use information includes one or more of the following information: historical use times, historical use duration, and the use time interval between the time point of the previous use and the current time point. The historical use duration may be an accumulated historical duration or a duration for a historical single use.

In some embodiments, the third acquisition portion 470 may be configured to: acquire the corresponding historical use information of each of the plurality of installed applications whose type is a preset application type.

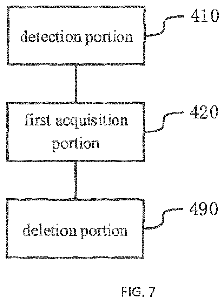

In some embodiments, as shown in FIG. 7, the device further includes: a deletion portion 490 configured to delete the target updated entry when the acquired target updated entry is detected to be not displayed within a preset duration starting from the time point that the target updated entry is acquired.

In some embodiments, the display portion 430 may be further configured to: when the instruction for displaying the updated entry of the corresponding application is received, if it is in the state that the wireless network is connected, acquire the updated entry to be displayed from the backend server of the target application, and display the acquired updated entry.

With respect to the device of the above embodiment, the specific method of operation performed by each portion has been described in detail in the embodiment of the method, and the description thereof may not be described in detail herein.

In some embodiments of the present disclosure, the pre-stored target geographic location that is not covered by the wireless network can be acquired and the current geographic location of the terminal can be detected. When it is detected that the distance between the current geographic location of the terminal and the target geographic location reaches the preset distance threshold, a request for the acquiring updated entry can be sent to the backend server of the application. When the instruction for displaying the updated entry of the corresponding target application is received, if it is currently in the state that wireless network is disconnected, the acquired target updated entry can be displayed. Thus, when a user wants to browse the update entry, if the geographic location of the user is not covered by the wireless network, the terminal can display pre-acquired target updated entry to prevent the updated entry from failing to be displayed.

Noteably, the device for displaying an updated entry provided by the above embodiment is exemplified only by the above division of each of the functional portions when the updated entry is displayed. In practice, the above-described functions may be assigned and completed by different functional portions in accordance with requirements, such that the internal structure of the terminal can be divided into different functional portions to complete all or some of the functions described above. In addition, the device and method for displaying an updated entry provided in the above embodiment follow the same principle, and the specific implementation process thereof can be described in the method embodiment and may not be described again.

The structural schematic diagram of a terminal 800 is illustrated in yet another example of present disclosure. The terminal 800 may be a mobile phone , a tablet computer, a digital broadcast device, a messaging device, a fitness device, a personal digital assistant or the like.

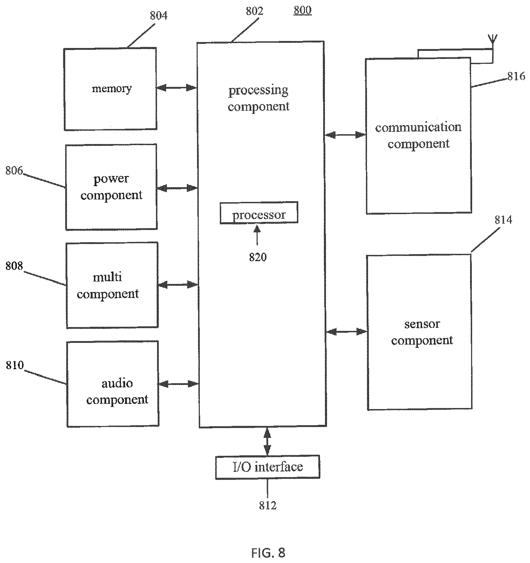

Referring to FIG. 8, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more portions which facilitate the interaction between the processing component 802 and other components. For instance, the processing component 802 may include a multimedia portion to facilitate the interaction between the multimedia component 808 and the processing component 802.

The memory 804 may be configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 may be configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface portions, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 may be configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) portion to facilitate short-range communications. For example, the NFC portion may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for displaying an updated entry.

In exemplary embodiments, there is also provided a non-transitory computer-readable storage medium including instructions, such as included in the memory 804, executable by the processor 820 in the terminal 800, for performing the above-described methods for displaying an updated entry. For example, the non-transitory computer-readable storage medium may be a ROM, a RAM, a CD-ROM, a magnetic tape, a floppy disc, an optical data storage device, and the like.

In exemplary embodiments, there is further provided a non-transitory computer-readable storage medium having a set of computer program instructions stored thereon, in which the computer program instructions are executable by a processor to implement a method for displaying an updated entry. For example, the computer-readable storage medium may be a ROM, a RAM, a CD-ROM, a magnetic tape, a floppy disk, an optical storage device and the like. The method includes: acquiring a pre-stored target geographic location that is not covered by a wireless network and detecting a current geographic location of a terminal; acquiring a current target updated entry from a backend server of a target application when a distance between the current geographic location of the terminal and the target geographic location is detected to reach a preset distance threshold, in which the target application is installed in the terminal and for users to browse the updated entry; and displaying the acquired target updated entry if a state where the wireless network is not connected is maintained when an instruction for displaying the updated entry for the target application is received.

In some embodiments, the method may further include determining and recording the current geographic location of the terminal when the wireless network is detected to be disconnected in a condition of the wireless network function is in an on state; acquiring a plurality of geographic locations recorded within a historical period of time; counting a frequency of occurrence for each of the plurality of geographic locations; and determining the target geographic location for which the frequency of occurrence satisfy a preset number.

In some embodiments, the method may further include: acquiring corresponding historical use information of each of a plurality of installed applications, in which the historical use information represents usage of a corresponding application; and determining, among the plurality of installed applications, the target application whose historical use information satisfies a preset use condition based upon the corresponding historical use information of each of the plurality of installed applications.

In some embodiments, the historical use information may include one or more of following information: historical use times, historical use duration, and time interval between a time point of a previous use and a current time point, where the historical use duration may be an accumulated historical duration or a duration for a historical single use.

In some embodiments, the method may further include: deleting the target updated entry when the target updated entry is detected to be not displayed within a preset duration starting from a time point that the target updated entry is acquired.

In some embodiments, the method may further include: acquiring an updated entry ready to be displayed from the backend server of the target application if a state where the wireless network is connected is maintained when the instruction for displaying the updated entry for the target application is received; and displaying the acquired updated entry.

In the embodiment of the present disclosure, the pre-stored target geographic location that is not covered by the wireless network can be acquired and the current geographic location of the terminal can be detected. When it is detected that the distance between the current geographic location of the terminal and the target geographic location reaches the preset distance threshold, a request for the acquiring updated entry can be sent to the backend server of the application. When the instruction for displaying the updated entry of the corresponding target application is received, if it is currently in the state that wireless network is disconnected, the acquired target updated entry can be displayed. Thus, when a user wants to browse the update entry, if the geographic location of the user is not covered by the wireless network, the terminal can display pre-acquired target updated entry to prevent the updated entry from failing to be displayed.

In the present disclosure, it is to be understood that the terms "lower," "upper," "center," "longitudinal," "transverse," "length," "width," "thickness," "upper," "lower," "front," "back," "left," "right," "vertical," "horizontal," "top," "bottom," "inside," "outside," "clockwise," "counterclockwise," "axial," "radial," "circumferential," "column," "row," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, the terms "installed," "connected," "coupled," "fixed" and the like shall be understood broadly, and may be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the present disclosure, a first element being "on," "over," or "below" a second element may indicate direct contact between the first and second elements, without contact, or indirect through an intermediate medium, unless otherwise explicitly stated and defined.

Moreover, a first element being "above," "over," or "at an upper surface of" a second element may indicate that the first element is directly above the second element, or merely that the first element is at a level higher than the second element. The first element "below," "underneath," or "at a lower surface of" the second element may indicate that the first element is directly below the second element, or merely that the first element is at a level lower than the second feature. The first and second elements may or may not be in contact with each other.

In the description of the present disclosure, the terms "one embodiment," "some embodiments," "example," "specific example," or "some examples," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described may be combined in a suitable manner in any one or more embodiments or examples. In addition, various embodiments or examples described in the specification, as well as features of various embodiments or examples, may be combined and reorganized.

In some embodiments, the control and/or interface software or app can be provided in a form of a non-transitory computer-readable storage medium having instructions stored thereon is further provided. For example, the non-transitory computer-readable storage medium may be a Read-Only Memory (ROM), a Random-Access Memory (RAM), a Compact Disc Read-Only Memory (CD-ROM), a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium may be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the invention defined in the following claims.

## Claims

1. A method for displaying an updated entry, comprising:
acquiring corresponding historical use information of each of a plurality of installed applications, wherein the historical use information represents usage of a corresponding application within a historical period of time;
determining, among the plurality of installed applications, a target application whose historical use information satisfies a preset use condition based upon the corresponding historical use information of each of the plurality of installed applications;
wherein the historical use information satisfying a preset use condition includes one or more of:
historical use times being greater than a preset time threshold, historical use duration being longer than the preset threshold, or a time interval between a time point of a previous use and a current time point being shorter than the preset threshold,
wherein the historical use duration is an accumulated historical duration or a duration for a historical single use;
acquiring (101) a pre-stored target geographic location that is not covered by a wireless network and detecting a current geographic location of a terminal;
acquiring (102) a current target updated entry from a backend server of the target application if a distance between the current geographic location of the terminal and the target geographic location is detected to reach a preset distance threshold, wherein the target application is installed in the terminal and for a user to browse the updated entry; and
displaying (103) the acquired target updated entry to the user if a state where the wireless network is not connected is maintained if an instruction for displaying the updated entry for the target application is received.

2. The method of claim 1, further comprising:
determining and recording the current geographic location of the terminal if the wireless network is detected to be disconnected in a condition that the wireless network function is in an on state;
acquiring a plurality of geographic locations recorded within a historical period of time;
counting a frequency of occurrence for each of the plurality of geographic locations;
determining the target geographic location for which the frequency of occurrence satisfies a preset number.

3. The method of claim 1, wherein acquiring the corresponding historical use information of each of a plurality of installed applications includes:
acquiring the corresponding historical use information of each of the plurality of installed applications having a preset application type.

4. The method of claim 1, further comprising:
deleting the target updated entry if the target updated entry is detected to be not displayed within a preset duration starting from a time point that the target updated entry is acquired.

5. The method of claim 1, further comprising:
acquiring an updated entry to be displayed from the backend server of the target application if a state where the wireless network is connected is maintained when the instruction for displaying the updated entry for the target application is received; and
displaying the acquired updated entry.

6. A terminal (800), comprising:
a processor (820); and
a memory device (804) configured to store a set of instructions executable by the processor (820),
wherein the processor (820) is configured, based on the instructions, to:
acquire corresponding historical use information of each of a plurality of installed applications, wherein the historical use information represents usage of a corresponding application within a historical period of time;
determine, among the plurality of installed applications, a target application whose historical use information satisfies a preset use condition based upon the corresponding historical use information of each of the plurality of installed applications;
wherein the historical use information satisfying a preset use condition includes one or more of:
historical use times being greater than a preset time threshold, historical use duration being longer than the preset threshold, or a time interval between a time point of a previous use and a current time point being shorter than the preset threshold,
wherein the historical use duration is an accumulated historical duration or a duration for a historical single use;
acquire (101) a pre-stored target geographic location that is not covered by a wireless network and detect a current geographic location of a terminal;
acquire (102) a current target updated entry from a backend server of the target application when a distance between the current geographic location of the terminal and the target geographic location is detected to reach a preset distance threshold, wherein the target application is installed in the terminal and for users to browse the updated entry ; and
display (103) the acquired target updated entry if a state where the wireless network is not connected is maintained when an instruction for displaying the updated entry for the target application is received.

7. The terminal of claim 6, wherein the processor (820) is further configured to:
determine and record the current geographic location of the terminal when the wireless network is detected to be disconnected in a condition of the wireless network function is in an on state;
acquire a plurality of geographic locations recorded within a historical period of time;
count a frequency of occurrence for each of the plurality of geographic locations;
determine the target geographic location for which the frequency of occurrence satisfies a preset number.

8. The terminal of claim 6, wherein the processor (820) is further configured to:
acquire the corresponding historical use information of each of the plurality of installed applications whose type is a preset application type.

9. The terminal of claim 6, wherein the processor (820) is further configured to:
delete the target updated entry when the target updated entry is detected to be not displayed within a preset duration starting from a time point that the target updated entry is acquired.

10. The terminal of claim 6, wherein the processor (820) is further configured to:
acquire an updated entry to be displayed from the backend server of the target application if a state where the wireless network is connected is maintained when the instruction for displaying the updated entry for the target application is received; and
display the acquired updated entry.

11. A non-transitory computer-readable storage medium (804) having a set of computer program instructions stored thereon, wherein the computer program instructions are executable by a processor (820) to implement a method for displaying an updated entry, wherein the method comprises:
acquiring corresponding historical use information of each of a plurality of installed applications, wherein the historical use information represents usage of a corresponding application within a historical period of time;
determining, among the plurality of installed applications, a target application whose historical use information satisfies a preset use condition based upon the corresponding historical use information of each of the plurality of installed applications;
wherein the historical use information satisfying a preset use condition includes one or more of:
historical use times being greater than a preset time threshold, historical use duration being longer than the preset threshold, or a time interval between a time point of a previous use and a current time point being shorter than the preset threshold,
wherein the historical use duration is an accumulated historical duration or a duration for a historical single use;
acquiring (101) a pre-stored target geographic location that is not covered by a wireless network and detecting a current geographic location of a terminal;
acquiring (102) a current target updated entry from a backend server of the target application if a distance between the current geographic location of the terminal and the target geographic location is detected to reach a preset distance threshold, wherein the target application is installed in the terminal and for users to browse the updated entry; and
displaying (103) the acquired target updated entry if a state where the wireless network is not connected is maintained if an instruction for displaying the updated entry for the target application is received.

## Patentansprüche

1. Verfahren zum Anzeigen eines aktualisierten Eintrags, umfassend:
Erfassen entsprechender historischer Nutzungsinformation von jeder von einer Vielzahl von installierten Anwendungen, wobei die historische Nutzungsinformation eine Nutzung einer entsprechenden Anwendung innerhalb einer historischen Zeitspanne darstellt;
Bestimmen einer Zielanwendung unter der Vielzahl von installierten Anwendungen, deren historische Nutzungsinformation eine voreingestellte Nutzungsbedingung erfüllt, basierend auf der entsprechenden historischen Nutzungsinformation von jeder von der Vielzahl von installierten Anwendungen;
wobei die historische Nutzungsinformation, die eine voreingestellte Nutzungsbedingung erfüllt, eine oder mehrere einschließt von:
historischen Nutzungszeiten, die größer als ein voreingestellter Zeitschwellenwert sind, einer historischen Nutzungsdauer, die länger als der voreingestellte Schwellenwert ist, oder einem Zeitintervall zwischen einem Zeitpunkt einer früheren Nutzung und einem aktuellen Zeitpunkt, das kürzer als der voreingestellte Schwellen-wert ist,
wobei die historische Nutzungsdauer eine akkumulierte historische Dauer oder eine Dauer für eine historisch einmalige Nutzung ist;
Erfassen (101) eines vorgespeicherten geographischen Zielortes, der nicht durch ein drahtloses Netzwerk abgedeckt ist, und Erkennen eines aktuellen geographischen Orts eines Endgerätes;
Erfassen (102) eines aktuellen aktualisierten Zieleintrags von einem Backend-Server der Zielanwendung, wenn erkannt wird, dass eine Entfernung zwischen dem aktuellen geographischen Ort des Endgerätes und dem geographischen Zielort einen voreingestellten Entfernungsschwellenwert erreicht, wobei die Zielanwendung in dem Endgerät installiert ist und ein Benutzer den aktualisierten Eintrag durchsuchen kann; und
Anzeigen (103) des erfassten aktualisierten Zieleintrags für den Benutzer, wenn ein Zustand, in dem das drahtlose Netzwerk nicht verbunden ist, aufrechterhalten wird, wenn eine Anweisung zum Anzeigen des aktualisierten Eintrags für die Zielanwendung empfangen wird.

2. Verfahren nach Anspruch 1, weiter umfassend:
Bestimmen und Aufzeichnen des aktuellen geographischen Orts des Endgerätes, wenn erkannt wird, dass das drahtlose Netzwerk in einem Zustand getrennt ist, in dem sich die drahtlose Netzwerkfunktion in einem Ein-Zustand befindet;
Erfassen einer Vielzahl von geographischen Orten, die innerhalb einer historischen Zeitspanne aufgezeichnet werden;
Zählen einer Häufigkeit des Auftretens für jeden von der Vielzahl von geographischen Orten;
Bestimmen des geographischen Zielortes, für den die Häufigkeit des Auftretens eine voreingestellte Zahl erfüllt.

3. Verfahren nach Anspruch 1, wobei das Erfassen der entsprechenden historischen Nutzungsinformation von jeder von einer Vielzahl von installierten Anwendungen einschließt:
Erfassen der entsprechenden historischen Nutzungsinformation von jeder von der Vielzahl von installierten Anwendungen mit einem voreingestellten Anwendungstyp.

4. Verfahren nach Anspruch 1, weiter umfassend:
Löschen des aktualisierten Zieleintrags, wenn erkannt wird, dass der aktualisierte Zieleintrag nicht innerhalb einer voreingestellten Zeitdauer angezeigt wird, die mit einem Zeitpunkt beginnt, zu dem der aktualisierte Zieleintrag erfasst wird.

5. Verfahren nach Anspruch 1, weiter umfassend:
Erfassen eines aktualisierten Eintrags, der anzuzeigen ist, von dem Backend-Server der Zielanwendung, wenn ein Zustand, in dem das drahtlose Netzwerk verbunden ist, aufrechterhalten wird, wenn die Anweisung zum Anzeigen des aktualisierten Eintrags für die Zielanwendung empfangen wird; und
Anzeigen des erfassten aktualisierten Eintrags.

6. Endgerät (800), umfassend:
einen Prozessor (820); und
eine Speichervorrichtung (804), die konfiguriert ist, um einen Satz von Anweisungen zu speichern, die von dem Prozessor (820) ausgeführt werden können,
wobei der Prozessor (820) basierend auf den Anweisungen konfiguriert ist zum:
Erfassen einer entsprechenden historischen Nutzungsinformation von jeder von einer Vielzahl von installierten Anwendungen, wobei die historische Nutzungsinformation eine Nutzung einer entsprechenden Anwendung innerhalb einer historischen Zeitspanne darstellt;
Bestimmen einer Zielanwendung unter der Vielzahl von installierten Anwendungen, deren historische Nutzungsinformation eine voreingestellte Nutzungsbedingung erfüllt, basierend auf der entsprechenden historischen Nutzungsinformation von jeder von der Vielzahl von installierten Anwendungen;
wobei die historische Nutzungsinformation, die eine voreingestellte Nutzungsbedingung erfüllt, eine oder mehrere einschließt von:
historischen Nutzungszeiten, die größer als ein voreingestellter Zeitschwellenwert sind, einer historischen Nutzungsdauer, die länger als der voreingestellte Schwellenwert ist, oder einem Zeitintervall zwischen einem Zeitpunkt einer früheren Nutzung und einem aktuellen Zeitpunkt, das kürzer als der voreingestellte Schwellen-wert ist,
wobei die historische Nutzungsdauer eine akkumulierte historische Dauer oder eine Dauer für eine historisch einmalige Nutzung ist;
Erfassen (101) eines vorgespeicherten geographischen Zielortes, der nicht durch ein drahtloses Netzwerk abgedeckt ist, und Erkennen eines aktuellen geographischen Orts eines Endgerätes;
Erfassen (102) eines aktuellen aktualisierten Zieleintrags von einem Backend-Server der Zielanwendung, wenn erkannt wird, dass eine Entfernung zwischen dem aktuellen geographischen Ort des Endgerätes und dem geographischen Zielort einen voreingestellten Entfernungsschwellenwert erreicht, wobei die Zielanwendung in dem Endgerät installiert ist und Benutzer den aktualisierten Eintrag durchsuchen können; und
Anzeigen (103) des erfassten aktualisierten Zieleintrags, wenn ein Zustand, in dem das drahtlose Netzwerk nicht verbunden ist, aufrechterhalten wird, wenn eine Anweisung zum Anzeigen des aktualisierten Eintrags für die Zielanwendung empfangen wird.

7. Endgerät nach Anspruch 6, wobei der Prozessor (820) weiter konfiguriert ist zum:
Bestimmen und Aufzeichnen des aktuellen geographischen Ortes des Endgerätes, wenn erkannt wird, dass das drahtlose Netzwerk in einem Zustand getrennt ist, in dem sich das drahtlose Netzwerk in einem Ein-Zustand befindet;
Erfassen einer Vielzahl von geographischen Orten, die innerhalb einer historischen Zeitspanne aufgezeichnet werden;
Zählen einer Häufigkeit des Auftretens für jeden von der Vielzahl von geographischen Orten;
Bestimmen des geographischen Zielortes, für den die Häufigkeit des Auftretens eine voreingestellte Zahl erfüllt.

8. Endgerät nach Anspruch 6, wobei der Prozessor (820) weiter konfiguriert ist zum:
Erfassen der entsprechenden historischen Nutzungsinformation für jede von der Vielzahl von installierten Anwendungen, deren Typ ein voreingestellter Anwendungstyp ist.

9. Endgerät nach Anspruch 6, wobei der Prozessor (820) weiter konfiguriert ist zum:
Löschen des aktualisierten Zieleintrags, wenn erkannt wird, dass der aktualisierte Zieleintrag nicht innerhalb einer voreingestellten Zeitdauer angezeigt wird, die mit einem Zeitpunkt beginnt, zu dem der aktualisierte Zieleintrag erfasst wird.

10. Endgerät nach Anspruch 6, wobei der Prozessor (820) weiter konfiguriert ist zum:
Erfassen eines aktualisierten Eintrags, der anzuzeigen ist, von dem Backend-Server der Zielanwendung, wenn ein Zustand, in dem das drahtlose Netzwerk verbunden ist, aufrechterhalten wird, wenn die Anweisung zum Anzeigen des aktualisierten Eintrags für die Zielanwendung empfangen wird; und
Anzeigen des erfassten aktualisierten Eintrags.

11. Nicht vorübergehendes computerlesbares Speichermedium (804) mit einem darauf gespeicherten Satz von Computerprogrammanweisungen, wobei die Computerprogrammanweisungen durch einen Prozessor (820) ausführbar sind, um ein Verfahren zum Anzeigen eines aktualisierten Eintrags zu implementieren, wobei das Verfahren umfasst:
Erfassen einer entsprechenden historischen Nutzungsinformation von jeder von einer Vielzahl von installierten Anwendungen, wobei die historische Nutzungsinformation eine Nutzung einer entsprechenden Anwendung innerhalb einer historischen Zeitspanne darstellt;
Bestimmen einer Zielanwendung unter der Vielzahl von installierten Anwendungen, deren historische Nutzungsinformation eine voreingestellte Nutzungsbedingung erfüllt, basierend auf der entsprechenden historischen Nutzungsinformation von jeder von der Vielzahl von installierten Anwendungen;
wobei die historische Nutzungsinformation, die eine voreingestellte Nutzungsbedingung erfüllt, eine oder mehrere einschließt von:
historischen Nutzungszeiten, die größer als ein voreingestellter Zeitschwellenwert sind, einer historischen Nutzungsdauer, die länger als der voreingestellte Schwellenwert ist, oder einem Zeitintervall zwischen einem Zeitpunkt einer früheren Nutzung und einem aktuellen Zeitpunkt, das kürzer als der voreingestellte Schwellen-wert ist,
wobei die historische Nutzungsdauer eine akkumulierte historische Dauer oder eine Dauer für eine historisch einmalige Nutzung ist;
Erfassen (101) eines vorgespeicherten geographischen Zielortes, der nicht durch ein drahtloses Netzwerk abgedeckt ist, und Erkennen eines aktuellen geographischen Orts eines Endgerätes;
Erfassen (102) eines aktuellen aktualisierten Zieleintrags von einem Backend-Server der Zielanwendung, wenn erkannt wird, dass eine Entfernung zwischen dem aktuellen geographischen Ort des Endgerätes und dem geographischen Zielort einen voreingestellten Entfernungsschwellenwert erreicht, wobei die Zielanwendung in dem Endgerät installiert ist und Benutzer den aktualisierten Eintrag durchsuchen können; und
Anzeigen (103) des erfassten aktualisierten Zieleintrags, wenn ein Zustand, in dem das drahtlose Netzwerk nicht verbunden ist, aufrechterhalten wird, wenn eine Anweisung zum Anzeigen des aktualisierten Eintrags für die Zielanwendung empfangen wird.

## Revendications

1. Procédé pour afficher une entrée mise à jour comprenant :
une acquisition d'une information d'utilisation historique correspondante de chacune d'une pluralité d'applications installées, dans lequel l'information d'utilisation historique représente une utilisation d'une application correspondante dans une période de temps historique ;
une détermination, parmi la pluralité d'applications installées, d'une application cible dont une information d'utilisation historique satisfait à une condition d'utilisation prédéfinie sur la base de l'information d'utilisation historique correspondante de chacune de la pluralité d'applications installées ;
dans lequel l'information d'utilisation historique satisfaisant à une condition d'utilisation prédéfinie inclut un ou plusieurs parmi :
des temps d'utilisation historique qui sont supérieurs à un seuil de temps prédéfini, une durée d'utilisation historique qui est plus longue que le seuil prédéfini, ou un intervalle de temps entre un point temporel d'une utilisation précédente et un point temporel actuel qui est plus court que le seuil prédéfini, dans lequel la durée d'utilisation historique est une durée historique cumulée ou une durée pour une unique utilisation historique ;
une acquisition (101) d'un emplacement géographique cible pré-stocké qui n'est pas couvert par un réseau sans fil et une détection d'un emplacement géographique actuel d'un terminal ;
une acquisition (102) d'une entrée mise à jour cible actuelle à partir d'un serveur dorsal de l'application cible si une distance entre l'emplacement géographique actuel du terminal et l'emplacement géographique cible est détecté comme atteignant un seuil de distance prédéfini, dans lequel l'application cible est installée dans le terminal et destinée à un utilisateur pour explorer l'entrée mise à jour ; et
une affichage (103) de l'entrée mise à jour cible acquise à l'utilisateur si un état où le réseau sans fil n'est pas connecté est maintenu si une instruction pour afficher l'entrée mise à jour pour l'application cible est reçue.

2. Procédé selon la revendication 1, comprenant en outre :
une détermination et un enregistrement de l'emplacement géographique actuel du terminal si le réseau sans fil est détecté comme étant déconnecté dans une condition où le réseau sans fil fonctionne dans un état activé ;
une acquisition d'une pluralité d'emplacements géographiques enregistrés dans une période de temps historique ;
un comptage d'une fréquence de survenance pour chacun de la pluralité d'emplacements géographiques ;
une détermination de l'emplacement géographique cible pour lequel la fréquence de survenance satisfait à un nombre prédéfini.

3. Procédé selon la revendication 1, dans lequel l'acquisition de l'information d'utilisation historique correspondante de chacune d'une pluralité d'applications installées inclut :
une acquisition de l'information d'utilisation historique correspondante de chacune de la pluralité d'applications installées ayant un type d'application prédéfini.

4. Procédé selon la revendication 1, comprenant en outre :
une suppression de l'entrée mise à jour cible si l'entrée mise à jour cible est détectée comme n'étant pas affichée dans une durée prédéfinie partant d'un point temporel où l'entrée mise à jour cible est acquise.

5. Procédé selon la revendication 1, comprenant en outre :
une acquisition d'une entrée mise à jour à afficher à partir du serveur dorsal de l'application cible si un état où le réseau sans fil est connecté est maintenu quand l'instruction pour afficher l'entrée mise à jour pour l'application cible est reçue ; et
un affichage de l'entrée mise à jour cible.

6. Terminal (800) comprenant :
un processeur (820) ; et
un dispositif de mémoire (804) configuré pour stocker un ensemble d'instructions exécutables par le processeur (820),
dans lequel le processeur (820) est configuré, sur la base des instructions, pour :
acquérir une information d'utilisation historique correspondante de chacune d'une pluralité d'applications installées, dans lequel l'information d'utilisation historique représente une utilisation d'une application correspondante dans une période de temps historique ;
déterminer, parmi la pluralité d'applications installées, une application cible dont une information d'utilisation historique satisfait à une condition d'utilisation prédéfinie sur la base de l'information d'utilisation historique correspondante de chacune de la pluralité d'applications installées ;
dans lequel l'information d'utilisation historique satisfaisant à une condition d'utilisation prédéfinie inclut un ou plusieurs parmi :
des temps d'utilisation historique qui sont supérieurs à un seuil de temps prédéfini, une durée d'utilisation historique qui est plus longue que le seuil prédéfini, ou un intervalle de temps entre un point temporel d'une utilisation précédente et un point temporel actuel qui est plus court que le seuil prédéfini, dans lequel la durée d'utilisation historique est une durée historique cumulée ou une durée pour une unique utilisation historique ;
acquérir (101) un emplacement géographique cible pré-stocké qui n'est pas couvert par un réseau sans fil et détecter un emplacement géographique actuel d'un terminal ;
acquérir (102) une entrée mise à jour cible actuelle à partir d'un serveur dorsal de l'application cible quand une distance entre l'emplacement géographique actuel du terminal et l'emplacement géographique cible est détecté comme atteignant un seuil de distance prédéfini, dans lequel l'application cible est installée dans le terminal et destinée à des utilisateurs pour explorer l'entrée mise à jour ; et
afficher (103) l'entrée mise à jour cible acquise si un état où le réseau sans fil n'est pas connecté est maintenu quand une instruction pour afficher l'entrée mise à jour pour l'application cible est reçue.

7. Terminal selon la revendication 6, dans lequel le processeur (820) est configuré en outre pour :
déterminer et enregistrer l'emplacement géographique actuel du terminal quand le réseau sans fil est détecté comme étant déconnecté dans une condition où le réseau sans fil fonctionne dans un état activé ;
acquérir une pluralité d'emplacements géographiques enregistrés dans une période de temps historique ;
compter une fréquence de survenance pour chacun de la pluralité d'emplacements géographiques ;
déterminer l'emplacement géographique cible pour lequel la fréquence de survenance satisfait à un nombre prédéfini.

8. Terminal selon la revendication 6, dans lequel le processeur (820) est configuré en outre pour :
acquérir l'information d'utilisation historique correspondante de chacune de la pluralité d'applications installées dont un type est un type d'application prédéfini.

9. Terminal selon la revendication 6, dans lequel le processeur (820) est configuré en outre pour :
supprimer l'entrée mise à jour cible quand l'entrée mise à jour cible est détectée comme n'étant pas affichée dans une durée prédéfinie partant d'un point temporel où l'entrée mise à jour cible est acquise.

10. Terminal selon la revendication 6, dans lequel le processeur (820) est configuré en outre pour :
acquérir une entrée mise à jour à afficher à partir du serveur dorsal de l'application cible si un état où le réseau sans fil est connecté est maintenu quand l'instruction pour afficher l'entrée mise à jour pour l'application cible est reçue ; et
afficher l'entrée mise à jour cible.

11. Support de stockage lisible par ordinateur non transitoire (804) ayant un ensemble d'instructions de programme informatique stockées dessus, dans lequel les instructions de programme informatique sont exécutables par un processeur (820) pour mettre en œuvre un procédé pour afficher une entrée mise à jour, dans lequel le procédé comprend :
une acquisition d'une information d'utilisation historique correspondante de chacune d'une pluralité d'applications installées, dans lequel l'information d'utilisation historique représente une utilisation d'une application correspondante dans une période de temps historique ;
une détermination, parmi la pluralité d'applications installées, d'une application cible dont une information d'utilisation historique satisfait à une condition d'utilisation prédéfinie sur la base de l'information d'utilisation historique correspondante de chacune de la pluralité d'applications installées ;
dans lequel l'information d'utilisation historique satisfaisant à une condition d'utilisation prédéfinie inclut un ou plusieurs parmi :
des temps d'utilisation historique qui sont supérieurs à un seuil de temps prédéfini, une durée d'utilisation historique qui est plus longue que le seuil prédéfini, ou un intervalle de temps entre un point temporel d'une utilisation précédente et un point temporel actuel qui est plus court que le seuil prédéfini, dans lequel la durée d'utilisation historique est une durée historique cumulée ou une durée pour une unique utilisation historique ;
une acquisition (101) d'un emplacement géographique cible pré-stocké qui n'est pas couvert par un réseau sans fil et une détection d'un emplacement géographique actuel d'un terminal ;
une acquisition (102) d'une entrée mise à jour cible actuelle à partir d'un serveur dorsal de l'application cible si une distance entre l'emplacement géographique actuel du terminal et l'emplacement géographique cible est détecté comme atteignant un seuil de distance prédéfini, dans lequel l'application cible est installée dans le terminal et destinée à des utilisateurs pour explorer l'entrée mise à jour; et
un affichage (103) de l'entrée mise à jour cible acquise si un état où le réseau sans fil n'est pas connecté est maintenu si une instruction pour afficher l'entrée mise à jour pour l'application cible est reçue.
